# EUROPÄISCHE PATENTSCHRIFT

(11) **EP 1 360 109 B1**
(45) Veröffentlichungstag und Bekanntmachung des Hinweises auf die Patenterteilung: **28.12.2005**
(21) Anmeldenummer: 02714151.4
(22) Anmeldetag: 08.02.2002
(51) Int. Cl.: B64D 11/06, B60N 2/18, B60N 2/02

(54) **FAHRZEUGSITZ MIT INNERHALB EINER RÄUMLICHEN BEGRENZUNG EINSTELLBAREN SITZKOMPONENTEN**
VEHICLE SEAT WITH SEATING COMPONENTS ADJUSTABLE WITHIN A SPATIAL CONSTRAINT
SIEGE DE VEHICULE CONSTITUE DE COMPOSANTS AJUSTABLES A L'INTERIEUR D'UNE LIMITATION D'ENCOMBREMANT

(30) Priorität: 16.02.2001 DE 10107195
(43) Veröffentlichungstag der Anmeldung: 12.11.2003
(73) Patentinhaber: Recaro Aircraft Seating GmbH & Co. KG, 74523 Schwäbisch Hall (DE)
(72) Erfinder: WAGNER, Wolfgang, 88048 Friedrichshafen (DE); BAUMANN, Jürgen, 78351 Bodman-Ludwigshafen (DE)
(74) Vertreter: Bartels & Partner
(86) Internationale Anmeldenummer: PCT/EP2002/001309
(87) Internationale Veröffentlichungsnummer: WO 2002/066325

(56) Entgegenhaltungen:
- EP-A- 0 774 913
- EP-A- 0 869 061
- WO-A-01/40013
- FR-A- 2 736 879
- US-A- 6 059 364
- PATENT ABSTRACTS OF JAPAN vol. 2000, no. 13, 5. Februar 2001 (2001-02-05) & JP 2000 279478 A (MATSUSHITA ELECTRIC WORKS LTD;MITSUBOSHI BELTING LTD), 10. Oktober 2000 (2000-10-10)

## Beschreibung

Die Erfindung betrifft einen Sitz, insbesondere Fahrzeugsitz, vorzugsweise Fluggastsitz, mit Sitzkomponenten, wie einem Sitzteil, einer Rückenlehne und einer Beinauflage, die über mindestens eine Betätigungseinrichtung in ihrer Lage, insbesondere in ihrer Neigung zueinander, einstellbar sind, und mit einer Überwachungseinrichtung zur Überwachung mindestens einer kollisionsbegründenden Randgeometrie einer bewegbaren Sitzkomponente mit einer vorgegebenen räumlichen Begrenzung, wobei die Überwachungseinrichtung zu jedem Zeitpunkt eine kollisionsfreie Bewegung dieser Sitzkomponente innerhalb dieser räumlichen Begrenzung sicherstellt, wobei die räumlichen Begrenzungen Räume voneinander abteilen, in denen jeweils ein Sitz eigenständig angeordnet ist.

In der nachveröffentlichten DE 199 44 620 ist ein Fluggastsitz beschrieben, der aus einzelnen Sitzkomponenten einschließlich einer Beinauflage und einer Rückenlehne besteht. Die genannten Sitzkomponenten sind mittels Betätigungseinrichtungen in Form sog. Stellantriebe oder Aktuatoren bewegbar, die von einer von Hand bedienbaren Betätigungseinrichtung zum Einstellen des Sitzes an die Belange des jeweiligen Sitzbenutzers ansteuerbar sind. Dabei sind für die Sitzteile den Konturen dieser Sitzteile nachempfundene Griffhebel als Teil der Betätigungseinrichtung vorhanden, die für eine Einstellung des Fluggastsitzes in einem Bedienteil zusammengefaßt eine sinnfällige Einstellung für die jeweiligen Sitzkomponenten ergeben. Um zu vermeiden, daß der Sitzbenutzer beim Einstellen der Sitzkomponenten an seine Bedürfnisse an feststehende Hindernisse anstößt, wie beispielsweise an den rückwärtigen Bereich einer Rückenlehne eines in der Sitzlängsrichtung vorausfolgenden Sitzes, sind bei den Stellantrieben Anschläge vorgesehen, gegen den die jeweilige Sitzkomponente fährt, wobei die dahingehende jeweilige Anschlagschranke auch bei Weiterbetätigen der zugehörigen Bedientaste nicht überschritten werden kann. Eine andere Möglichkeit besteht im Abschalten des Antriebes durch Grenznockenschalter od. dgl.. Das Anfahren dahingehender Begrenzungsschranken geschieht bei den bekannten Sitzkonstruktionen nicht immer ruckfrei, was zu einer Beeinträchtigung des Sitzkomforts führt. Auch ist die jeweilige Sitzkomponente derart über Anschläge in den Maximal-Auslenkstellungen gesichert, daß eine sinnfällige harmonische Bewegung aller Sitzkomponenten, beispielsweise um den Fluggastsitz von einer aufrechten Stellung in eine durchgehende Liegeposition "umzubauen", hemmnisfrei gar nicht möglich ist.

Zur Beseitigung des vorstehend beschriebenen Mangels ist in der EP-B-0774913 bereits bei einem gattunsgemäßen Fahrzeug- oder Fluggastsitz vorgeschlagen worden, eine elektrische Steuerung vorzusehen, die in ihrer Funktion auf eine Beinauflage einwirkt, um die Position der Beinruhestellung zu überwachen, damit ein Aufstoßen der Fußstütze als integraler Bestandteil der Beinauflage auf den Boden verhindert wird. Zur Realisierung des dahingehenden Aufstoßschutzes überwacht die elektronische Steuerung über entsprechende Sensoren sowohl die Ist-Stellung der Fußstütze als auch die Ist-Stellung der Beinauffage. Dabei wird ein Signal an die Steuerung ausgegeben, daß der Fußruhestellung sowie der aktuellen Beinruhestellung entspricht. Ferner dient die elektronische Steuerung dem Feststellen, ob die Fußstütze bei mindestens einer Bewegung der Beinauflage aus der Beinruhestellung und bei Bewegung der Fußstütze aus der Fußruhestellung auf den Boden aufstoßen wird und dem Bewegen der Fußstütze aus der Ist-Stellung in eine festgelegte sichere Stellung, sofern die Gefahr besteht, daß die Fußstütze den Boden berühren wird.

Bei der dahingehenden Ausgestaltung wird nur eine Sitzkomponente in Form der Beinauflage entsprechend überwacht und zur Vermeidung einer Kollision mit dem Bodenbereich angesteuert. Das Einbeziehen weiterer anderer Sitzkomponenten, wie das Sitzteil und/oder die Rückenlehne, erfolgt jedoch nicht, so daß bezogen auf diese Sitzkomponenten Kollisionen mit feststehenden oder sonstigen Raumhindernissen nicht auszuschließen sind. Selbst wenn man die Steuer- und Überwachungseinrichtung für die Beinstütze auf das Sitzteil und/oder die Rückenlehne übertragen würde, wäre nur für die jeweilige Sitzkomponente eine Vermeidung möglicher Kollisionen erreicht, nicht jedoch für den Sitz als Ganzes, da die genannten Überwachungssysteme nicht miteinander wechselwirken. Gegebenenfalls wird also bei der bekannten Lösung, bevor die Beinauflage auf dem Flugzeugboden aufstößt, die mögliche Kollision erfaßt und die gesamte Sitzkinematik des Sitzes abgestellt und in dieser Position "eingefroren", was einen hemmfreien Bewegungsablauf für den gesamten Sitz.unmöglich macht und den Sitzkomfort entsprechend beeinträchtigt. Eine gemeinsame Bewegung aller Sitzkomponenten ist bei der bekannten Lösung nur insoweit erreicht, als durch die Betätigung eines einzeinen Betätigungsknopfes (magic button) alle Sitzkomponenten von einer Liegeposition in eine aufrechte Sitzposition und umgekehrt gebracht werden können.

Durch die FR-A-2 736 879 ist ein Fahrzeugsitz bekannt mit Sitzkomponenten, wie einem Sitzteil, einer Rückenlehne und einer Kopfstütze. Die Sitzkomponenten sind über mindestens eine Betätigungseinrichtung in ihrer Lage, insbesondere in ihrer Neigung zueinander, einstellbar, wobei eine Überwachungseinrichtung vorhanden ist zur Überwachung mindestens einer kollisionsbegründenden Randgeometrie einer bewegbaren Sitzkomponente mit einer vorgegebenen räumlichen Begrenzung, wobei die Überwachungseinrichtung zu jedem Zeitpunkt eine kollisionsfreie Bewegung dieser Sitzkomponente innerhalb der räumlichen Begrenzung sicherstellt.

Eine räumlich geradlinig verlaufende Begrenzungswand oder -linie bildet bei der Lösung nach der EP-B-0 774 913 der Kabinenboden aus, der zur Vermeidung einer Kollision seitens der Fuß- und Beinauflage des bekannten Sitzes nicht berührt werden soll. Bei beiden zuletzt genannten Lösungen im Stand der Technik ist darüber hinaus vorgesehen, dass alle Sitzkomponenten von einer Bedienperson oder einem Sitzbenutzer individuell einstellbar sind, so dass in einem sehr weit gezogenen Rahmen der Sitz an den Sitzbenutzer anpaßbar ist, wobei die jeweils individuell eingenommene Position nicht immer Ergonomiegesichtspunkten genügen muß.

Zwar sieht die bekannte Sitzlösung nach der FR-A-2 736 879 als fiktive Begrenzung für einen Aufstoßschutz eine Plausibilitätsprüfung für die einzelnen Sitzkomponenten dergestalt vor, dass die einzelnen Sitzkomponenten nicht völlig wahllos aufeinander zugestellt werden, was gegebenenfalls zur Verletzung eines Sitzbenutzers, beispielsweise durch Einklemmen, führen könnte; allein wirklich sinnvoll vorgegebene Einstellpositionen, die nach ergonomischen Gesichtspunkten verläßlich überprüft sind, lassen sich mit den bekannten Lösungen nicht erreichen.

Ausgehend von diesem Stand der Technik liegt der Erfindung die Aufgabe zugrunde, die bekannten Sitze dahingehend weiter zu verbessern, daß der jeweilige Sitz als Gesamtsystem von schädlichen Kollisionen ausgenommen bleibt. Darüber hinaus soll der Sitz auch gestiegenen ergonomischen Anforderungen gerecht werden, kostengünstig in der Herstellung sein und wenig Gewicht benötigen. Eine dahingehende Aufgabe löst ein Sitz mit der Merkmalen des Patentanspruches 1 in seiner Gesamtheit.

Die erfindungsgemäße Lösung ermöglicht es, den Sitz, insbesondere Fahrzeugsitz bzw. den Fluggastsitz als Gesamtsystem zu begreifen und für diesen insgesamt, also mit allen Sitzkomponenten, einen wirksamen Kollisionsschutz zu gewährleisten. Dabei überwacht die Überwachungseinrichtung die jeweils kollisionsbegründenden Randgeometrien aller bewegbaren Sitzkomponenten und gleicht diese Randgeometrien mit vorgegebenen räumlichen Begrenzungen als Grenzkurven derart ab, daß zu jedem Zeitpunkt eine kollisionsfreie Bewegung aller Sitzkomponenten innerhalb der räumlichen Begrenzungen sichergestellt ist.

Durch die Überwachung des kompletten Gesamtsitzes wird die Bewegung aller Sitzkomponenten derart durchgeführt, daß diese allesamt in einer Art Hüllkurve für den Sitz verbleiben, wobei die Hüllkurve bzw. die Umhüllende räumlich derart gewählt ist, daß es nicht zu Kollisionen mit festen Raumbegrenzungen kommen kann, wobei diese Raumbegrenzungen als Grenzkurven selbst wiederum auch beweglich sein könnten, beispielsweise gebildet aus den Bewegungsräumen anderer benachbart liegender Sitze. Wird also beispielsweise die Beinauflage verschwenkt, kann in sinnfälliger Weise die Rückenlehne der Bewegung nachfolgen, um beispielsweise eine vom Sitzbenutzer gewünschte Ruhe- oder Liegestellung einzunehmen, wobei dann die Bewegung der genannten Sitzkomponenten synchron innerhalb der Hüllkurve erfolgt und zu keinem Zeitpunkt eine Kollision aufgrund dieser gemeinsamen Ansteuerung möglich ist. In diese genannte gemeinsame Bewegung von Beinauflage und Rückenlehne kann auch die Sitzauflage bzw. das Sitzteil in sinnfälliger Weise mit einbezogen werden. Unabhängig hiervon ist es möglich, sofern eine Sitzkomponente in den Bereich einer möglichen Kollision mit anderen räumlichen Begrenzungen gerät, diese in ihrer jeweiligen Lage einzufrieren und die anderen Sitzkomponenten in ihrer freien Verfahrbarkeit zu belassen, um dergestalt für den Sitzbenutzer in einem weitest möglichen Gestaltungsrahmen eine beliebige Anzahl an Sitzeinstellmöglichkeiten zu schaffen.

Die jeweiligen Sitzteile sind in ihrem Bewegungsablauf miteinander gekoppelt und verfahren nach einem Ablaufplan, der nach ergonomischen Gesichtspunkten ausgewählt ist. In jeder Verfahrstellung der einzelnen Sitzkomponenten zueinander, wird also darauf geachtet, daß diese nicht eine Stellung zueinander einnehmen können, die für einen durchschnittlichen Sitzbenutzer als unbequem erachtet wird, beispielsweise weil die eingenommene Fußstellung nicht zu der eingestellten Neigung der Rückenlehne und/oder der Sitzteile ergonomisch korrespondiert. Die Überwachungseinrichtung steuert also alle Sitzkomponenten dergestalt an, daß zum einen für alle Sitzkomponenten eine sinnfällige Bewegungsablaufsituation für den Sitzbenutzer erreicht wird und dennoch gleichzeitig ein Kollisionsschutz für alle Komponenten gewährleistet ist. Mithin ist eine synchrone Ansteuerung sowie ein vereinheitlichter Bewegungsablauf für alle Komponenten möglich, was eine deutliche Steigerung des Sitzkomfort auch auf Langstreckenflügen oder dergleichen sicherstellt. Vorzugsweise ist dabei jedoch die Überwachungseinrichtung noch mit einer Plausibilitätskontrolle versehen, um zu vermeiden, daß der Sitz in eine Stellung gerät, die für den Sitzbenutzer gefährlich und auf andere Weise unzumutbar werden könnte.

Bei der Ermittlung der jeweiligen Hüllkurve für den Sitz oder seine Sitzkomponenten wird in vorteilhafter Weise die Sitzkontur des Sitzbenutzers mit einbezogen, um zu vermeiden, daß der Sitz selbst den Kollisionsvermeidungsanforderungen genügt; der Sitzbenutzer selbst aber mit feststehenden oder bewegbaren Teilen anderer Sitze in unangenehme Berührung kommen kann. Durch das Einbeziehen der Sitzkontur in die Hüllkurvenkonstruktion ist mithin einer etwaigen Verletzungsgefahr jedenfalls mit Sicherheit begegnet. Durch einen zentralen Antrieb, mit dem alle Sitzkomponenten ansteuerbar sind, baut der bekannte Sitz leicht auf und ist kostengünstig realisierbar.

Weitere vorteilhafte Ausführungsformen sind Gegenstand der Unteransprüche.

Der erfindungsgemäße Sitz läßt sich für eine Vielzahl von Anwendungen einsetzen, beispielsweise auch im medizinischen oder therapeutischen Bereich, einschließlich in der Form verschiedener Behandlungsstühle, auch für einen kosmetischen Einsatz. Vorzugsweise ist der Sitz jedoch als hochwertiger Fahrzeugsitz konzipiert und kann in Bereichen von Reisebussen, Schiffsfähren und dergleichen mehr eingesetzt werden. Besonders bevorzugt ist jedoch der Einsatz als Fluggastsitz, so daß im folgenden die erfindungsgemäße Sitzlösung anhand der Zeichnung, die einen Fluggastsitz betrifft, näher erläutert wird.

Es zeigen in prinzipieller und nicht maßstäblicher Darstellung die
- Fig.1 und 2: in jeweiliger Schrägansicht einen Fluggastsitz in voll- ständig aufgerichteter Lage bzw. in Liege- oder Ruhe- konfiguration;
- Fig.3: in der Art eines mathematischen Gelenkmodells eine Seitendarstellung auf den Fluggastsitz mit Begrenzungs- linien.

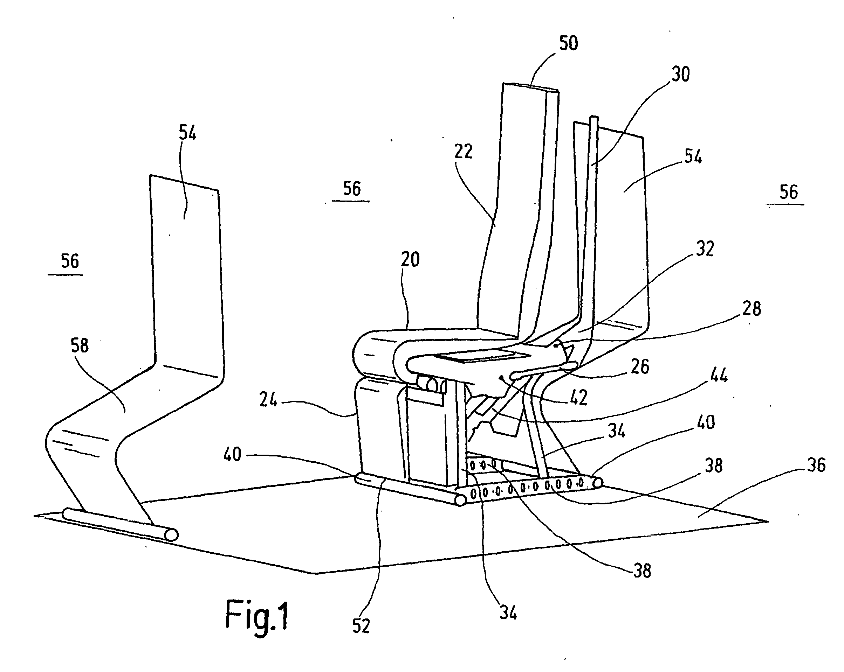

Die Darstellung nach der Fig.1 zeigt einen Fluggastsitz in aufrechter Stellung (upright position). Solche Fluggastsitze mit dem entsprechenden Ausstattungsniveau finden sich häufig im 1.Klasse-Bereich von Langstrecken-Flugzeugen. Der gezeigte Fluggastsitz nach der Fig.1 ist vorzugsweise Bestandteil eines Einzelabteils (compartment): kann dem Grunde nach aber auch in Reihe mehrfach nebeneinander angeordnet im Business-Class-Bereich für eine übliche Mehrsitzanordnung Verwendung finden. Der Fluggastsitz ist aus einzelnen Sitzkomponenten zusammengesetzt, wie einem Sitzteil 20, einer Rückenlehne 22 und einer Beinauflage 24. Der besseren Darstellung wegen ist darüber hinaus die Polsterauflage für die genannten Sitzkomponenten nur teilweise wiedergegeben, so daß die darunterliegenden Fluggast-Sitzteile zumindest teilweise sichtbar sind. Die Rückenlehne 22 ist über eine teilweise dargestellte erste Betätigungseinrichtung 26 in ihrer Neigung gegenüber dem in der Grundstellung im wesentlichen horizontal verlaufenden Sitzteil 20 schwenkbar um eine Gelenkstelle 28 angeordnet. Von der eigentlichen Rückenlehnenmechanik ist darüber hinaus der vordere Längsträger 30 dargestellt, der an seinem unteren Ende in einem Gabelendstück 32 mündet, wobei das eine Gabelende mit der ersten Betätigungseinrichtung 26 zusammenwirkt und das andere Gabelende an der Gelenkstelle 28 angreift.

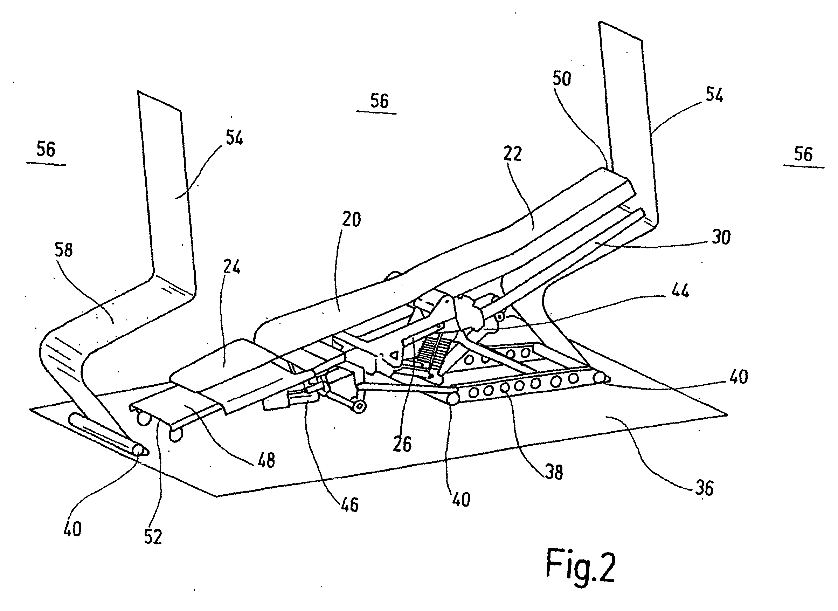

Das Sitzteil 20 wiederum, das an seinem vorderen freien Ende über eine Auflagefläche für die Oberschenkel eines nicht näher dargestellten Sitzbenutzers verfügt, ist über vier Ständerbeine 34 auf dem Kabinenboden 36 eines Passagierflugzeuges, Reiseomnibusses od. dgl. aufständerbar, und zwar mit Hilfe von einem Paar an Bodenschienen 38. Mithin sind entlang der Längsrichtung des Fluggastsitzes zwei Paare an Ständerbeinen 34 mit ihrem unteren Ende mit einem Paar an Bodenschienen 38 verbunden. Am vorderen und hinteren Ende der beiden Bodenschienen 38 sind diese jeweils mit einem Querrohr 40 entsprechend versteift. Nach oben hin gehen die beiden Paare an Ständerbeinen 34 in ein Sitzrahmengestell 42 über, das die Polsterteile des Sitzteils 20 trägt. Über eine weitere zweite Betätigungseinrichtung 44 läßt sich unter anderem auch die hintere Sitzkante des Sitzteils 20 absenken, um derart eine nicht näher dargestellte Ruhe-Zwischenposition für den Sitzbenutzer zu ermöglichen. Eine in der Fig.2 dargestellte dritte Betätigungseinrichtung 46 erlaubt ein Verschwenken und mithin eine Neigungseinstellung für die Beinauflage 24. Die dahingehende Ansteuerung von verschiedenen Sitzkomponenten mittels verschiedener Betätigungseinrichtungen ist üblich, so daß an dieser Stelle hierauf nicht mehr näher eingegangen wird. Des weiteren wird bei dem gesamten Sitz auf Leichtbauweise geachtet, um entsprechend die Nutzlast erhöhen zu können.

Die genannte Beinauflage 24 weist an ihrem unteren Ende gemäß der Darstellung nach der Fig.2 eine Beinauflagenverlängerung 48 auf, die je nach Bedarf aus der Grundkonstruktion der Beinauflage 24 ein- und ausfahrbar mittels der Betätigungseinrichtung gehalten ist. Des weiteren kann die Rükkenlehne 22 auf ihrer Oberseite mit einer nicht näher dargestellten Kopfstütze versehen sein, die gleichfalls über eine Höheneinstellmöglichkeit verfügt und im übrigen integraler Bestandteil der Rückenlehne 22 selbst ist, so daß bei der folgenden Betrachtung jedenfalls die Lehnenoberkante eine etwaige Kopfstütze längs ihrer Oberseite mit einschließt.

Des weiteren ist der Fluggastsitz mit einer Überwachungseinrichtung ausgestattet, beispielsweise in Form einer Steuereinheit, einer Rechnereinheit einschließlich eines Kleinprozeßrechners od. dgl.. Die nicht näher dargestellte Überwachungseinrichtung dient der Überwachung der jeweils kollisionsbegründenden Randgeometrien der bewegbaren Sitzkomponenten mit vorgegebenen räumlichen Begrenzungen, wobei die Überwachungseinrichtung durch Ansteuern der jeweiligen Betätigungseinrichtung 26,44 und 46 zu jedem Zeitpunkt eine kollisionsfreie Bewegung aller Sitzkomponenten innerhalb der genannten räumlichen Begrenzungen sicherstellt. Als kollisionsbegründende Randgeometrien ist im vorliegenden Fall die Lehnenoberkante 50 der Rückenlehne 22 zu sehen sowie die Unterseite 52 der Beinauflage 24, gegebenenfalls unter Einbeziehen der Beinauflagenverlängerung 48 (vgl. Fig.2). Da jede Sitzkomponente 20,22,24 und 48 über eine eigenständige Betätigungseinrichtung 26,44 und 46 verfügt, ist vorgesehen, daß die Überwachungseinrichtung die Stellungen jeder einzelnen Betätigungseinrichtung 26,44 und 46 erfaßt, um derart eine mathematische Rückkopplung über die Position der Sitzkomponenten zu erhalten. Mithin ist es möglich, unter Verzicht auf etwaige Bewegungssensoren, Grenznockenschaltern od. dgl. über die Stellwege der jeweiligen Betätigungseinrichtung 26,44 und 46 auch über die Neigungseinstellwinkel gegenüber einer Bezugsebene für die Sitzkomponenten Informationen zu erhalten.

Als besonders vorteilhaft hat sich dabei erwiesen, die einzelnen Betätigungseinrichtungen 26,44. und 46 in Form von sog. elektromechanischen Aktuatoren auszubilden, um über den Einstellweg der jeweiligen Betätigungsstange eine Wegmeldung über den Einstellweg zu erhalten. Neben den elektromechanischen Aktuatoren können jedoch auch Spindeltriebe und/oder hydraulische sowie pneumatische Stangenantriebe bzw. Arbeitszylinder Verwendung finden. Bei der Ermittlung der kollisionsbegründenden Randgeometrien kann vorzugsweise eine ein Maximum bildende Körperkontur eines Sitzbenutzers mit in die Überlegungen einbezogen werden.

Die räumlichen Begrenzungen wiederum sind durch Grenzkurven 54 beschrieben, die Räume 56 voneinander abteilen, in denen jeweils ein Sitz eigenständig auf dem Kabinenboden 36 angeordnet ist. Die Überwachungseinrichtung faßt dann alle möglichen Bewegungen der kollisionsbegründenden Randgeometrien 50,52 in einer Art gemeinsamen Hüllkurve zusammen, deren Ränder zur Vermeidung von Kollisionen zumindest teilweise durch die Grenzkurven 54 der räumlichen Begrenzung für den Sitz definiert sind. Wie die Fig. 1 und 2 zeigen, bilden die beiden Grenzkurven 54 Raumteiler eines sog. Compartments aus, in dem der Sitzbenutzer sich frei bewegen und beispielsweise auch auf eine Wascheinrichtung od. dgl. zurückgreifen kann. Die gezeigten Grenzkurven 54 stellen mithin die Privatsphäre für den Sitzbenutzer während seines Fluges sicher. Die Grenzkurven 54 können aber wiederum auch eine Randbegrenzung bilden für den Verfahrweg eines in Reihe vor oder hinter dem gezeigten Sitz vorhandenen weiteren Sitzes (nicht dargestellt), der über entsprechende Einstellgeometrien für seine Sitzkomponenten verfügt. Auch insofern sind die Begrenzungsbereiche 54 dann zu beachten, um Kollisionen mit den vorausgehenden und nachfolgenden jeweiligen Sitzen sicherzustellen.

Wie des weiteren die Fig.2 zeigt, läßt sich zwischen den genannten Grenzkurven 54 der Sitz aus seiner vollständig aufgerichteten Stellung nach der Fig. 1 in eine Liegestellung (Bed-Position) verbringen, bei der Sitzteil 20; Rückenlehne 22, Beinauflage 24 sowie gegebenenfalls ausgefahrene Beinauflagenverlängerung 48 eine geneigt durchgehende Ebene für die Ruhe- oder Schlafstellung herstellen. Zum Herstellen der Ruhestellung werden dabei über entsprechende Aktuatoren die Paare an Ständerbeinen 34 um ihre unteren Drehpunkte an den beiden in Längsrichtung verlaufenden Bodenschienen 38 vorhandenen Schwenkpunkten weit nach vorne geneigt, so daß die vordere Kante des Sitzteils 20 nach unten geneigt ist und die hintere Übergangskante zur Rückenlehne 22 hochgestellt wird. Die Bodenschienen 38, auf denen der Sitz äufständerbar ist, sind dabei mit ihrem jeweils einen freien Ende über das hintere Querrohr 40 in Anlage mit der hinteren Grenzkurve 54 der gezeigten räumlichen Begrenzung.

Durch die Überwachung des kompletten Gesamtsitzes wird also die Bewegung aller Sitzkomponenten derart durchgeführt, daß diese allesamt in einer Art Hüllkurve oder Umhüllende für den Sitz verbleiben, wobei die Hüllkurve bzw. die Umhüllende räumlich derart gewählt ist, daß es nicht zu Kollisionen mit den Festraumbegrenzungen in Form der Grenzkurven 54 kommen kann.

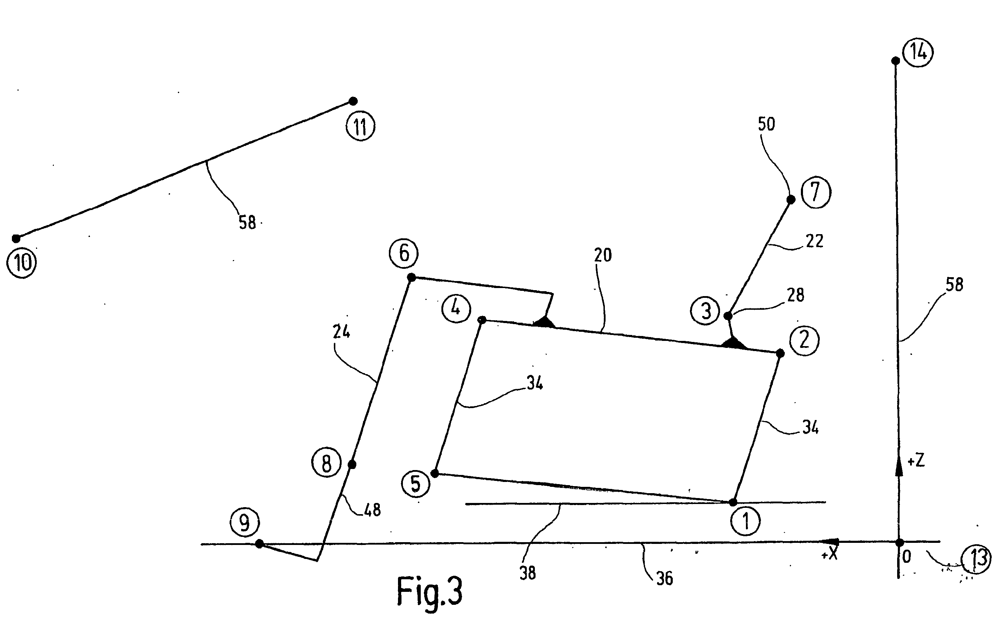

In der Fig.3 ist eine Ausführungsform einer Art eines Grundlagenmodells aufgezeigt, das über entsprechende Gelenkstellen 1 bis 9 den eigentlichen Sitz definiert. Die Gelenkpunkte 1,2,4 und 5 spannen dabei den Rahmen für das Sitzrahmengestell 42 auf mit den Paaren an Ständerbeinen 34. Der in Blickrichtung auf die Fig.3 gesehen untere Bezugspunkt 1 ist um einen Weg entlang der Z-Achse etwas angehoben, was der Höhe der jeweiligen Bodenschiene 38 entspricht bezogen auf den Kabinenboden 36, der die Null-Linie bzw. den mit 13 bezeichneten Null-Punkt definiert. Von dem mit 13 bezeichneten Referenz-Nullpunkt aus gesehen wird in Blickrichtung auf die Fig.3 gesehen nach links in.horizontaler Ebene mit positiven X-Werten gerechnet und in Richtung des oberen Referenz-Punktes 14 mit positiven Z-Koordinaten. Die mit 3 und 7 bezeichneten Endpunkte in der Fig.3 begrenzen im mathematischen Modell die Rückenlehne 22, wobei der Bezugspunkt 7 gleichzusetzen ist mit der Lehnenoberkante 50.

Der Bezugspunkt 3 wiederum bezieht sich auf die Gelenkstelle 28 für die Rückenlehne 22. Zwischen den oberen Punkten 2 und 4 des Sitzrahmengestells erstreckt sich in dem mathematischen Modell nach der Fig.3 das Sitzteil 20. Zwischen den Punkten 6 und 8 erstreckt sich die Beinauflage 24, die über den oberen Punkt 6 gelenkig mit dem Sitzteil 20 verbunden ist. An dem Punkt 8 erstreckt sich des weiteren nach unten hin die Beinauflagenverlängerung 48 und der Bezugspunkt 9 gibt modellhaft die Fußspitze eines nicht näher dargestellten Sitzbenutzers an, um dergestalt in das mathematische Bewegungsmodell den Konturenrahmen eines Sitzbenutzers zumindest teilweise mit einzubeziehen. Die in der Fig.3 gezeigte untere Referenzlinie gibt, wie bereits dargelegt, den Kabinenboden 36 als untere Begrenzung wieder und die -vertikal erstreckende Linie 13,14 stellt eine vereinfachte mathematische Wiedergabe der in Blickrichtung auf die Fig.1 und 2 zuhinterst dargestellten Grenzkurve 54 dar. Die in Blickrichtung auf die Fig.1 und 2 gesehen vordere Grenzkurve 54 findet ihren Niederschlag in dem mathematischen Modell in Form der Begrenzungsfläche 58 wieder, die sich zwischen den Bezugspunkten 10 und 11 in der Fig.3 erstreckt.

Die nachfolgend wiedergegebenen Formelzusammenhänge gehen auf die mathematische Grundmodelldarstellung nach der Fig.3 zurück und die gewählten Definitionen und mathematischen Formulierungen ergeben sich aus der gewählten Programmsprache Excel.

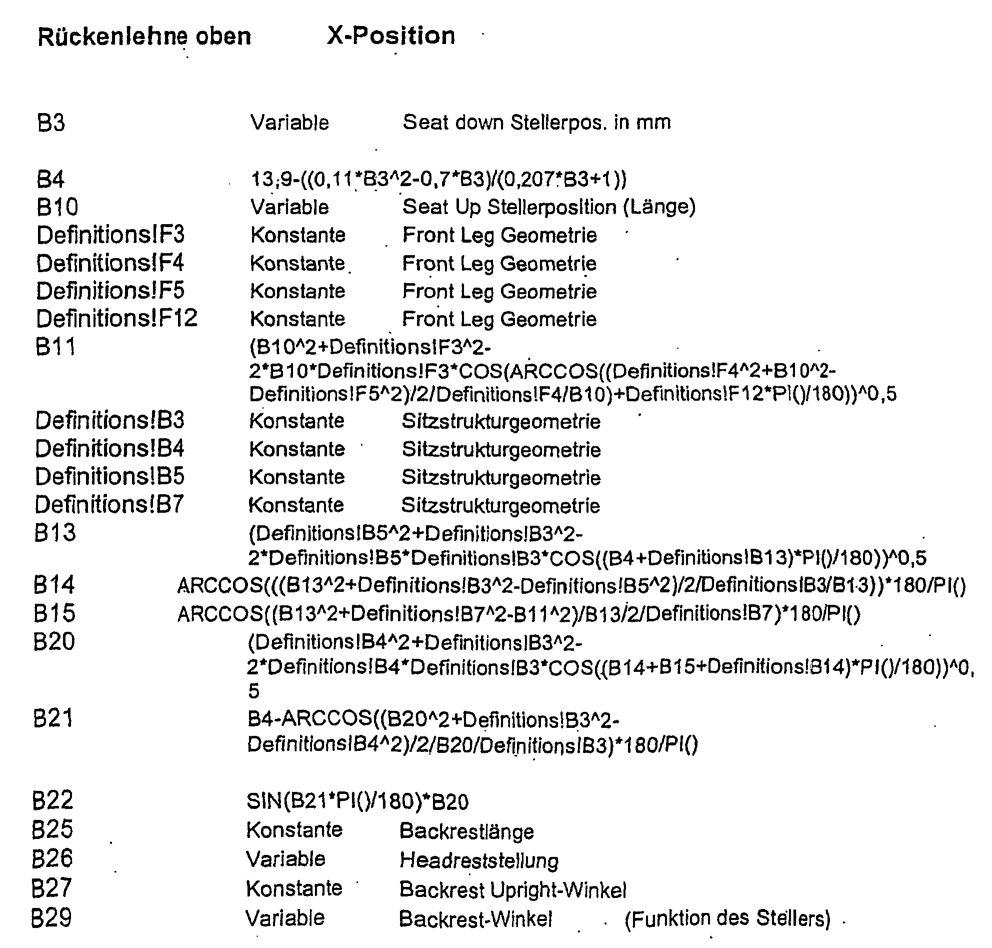

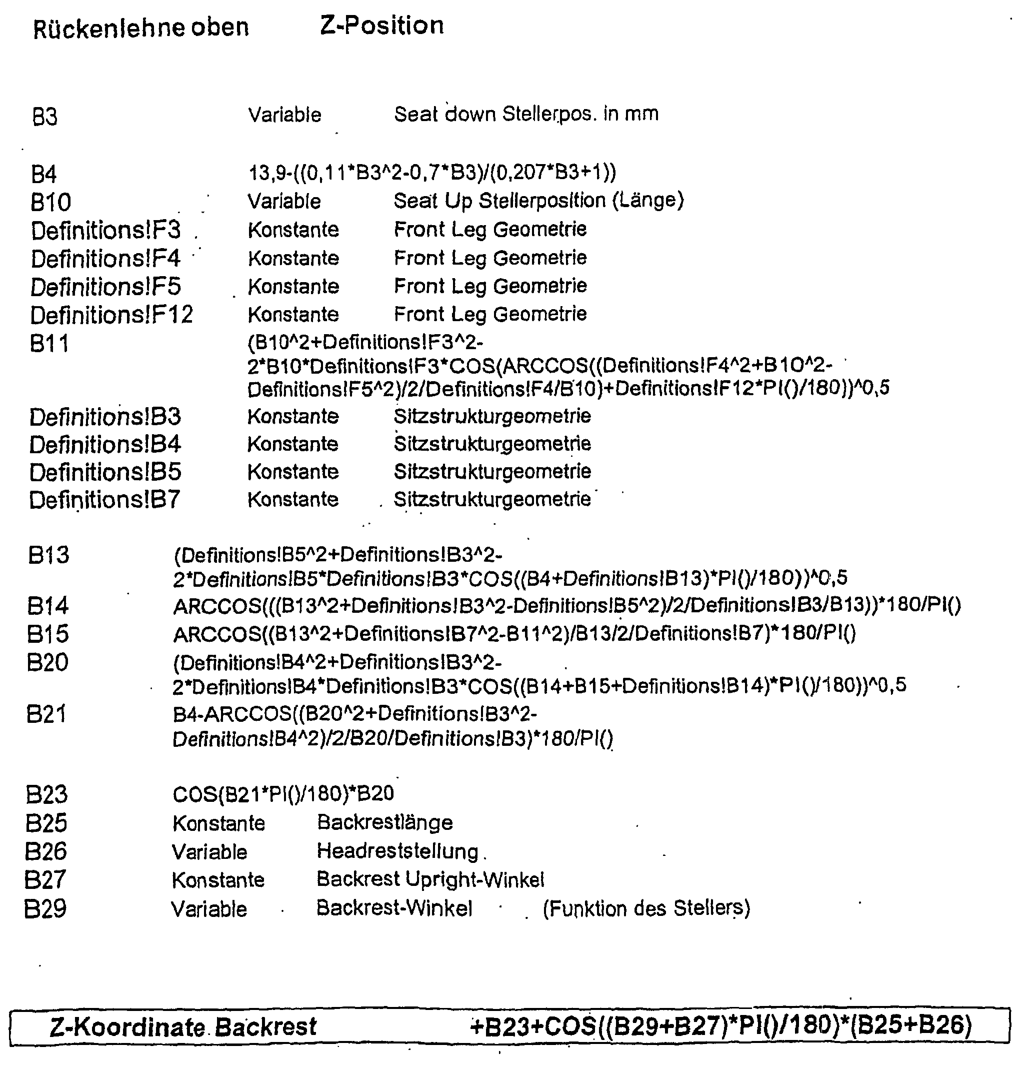

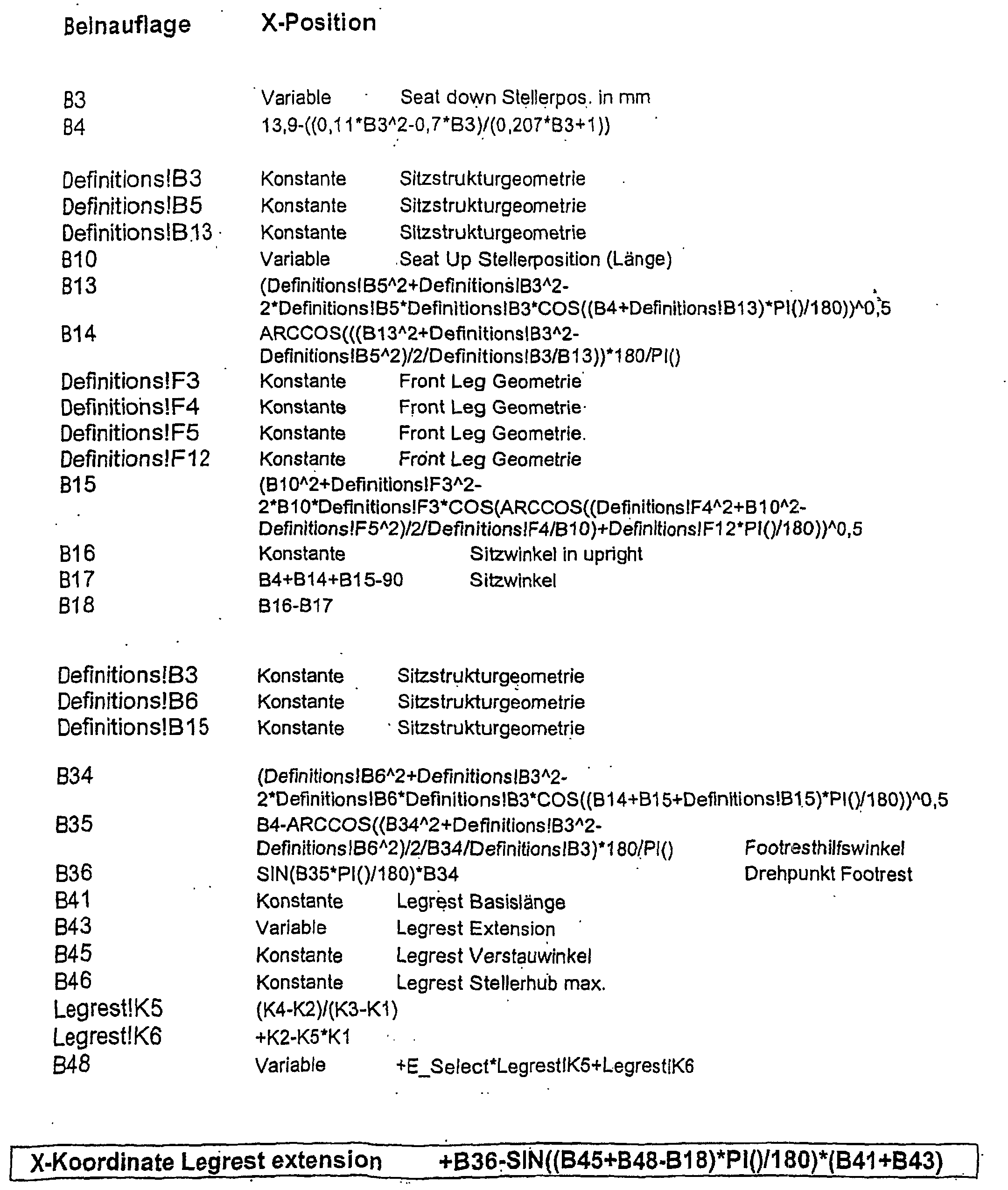

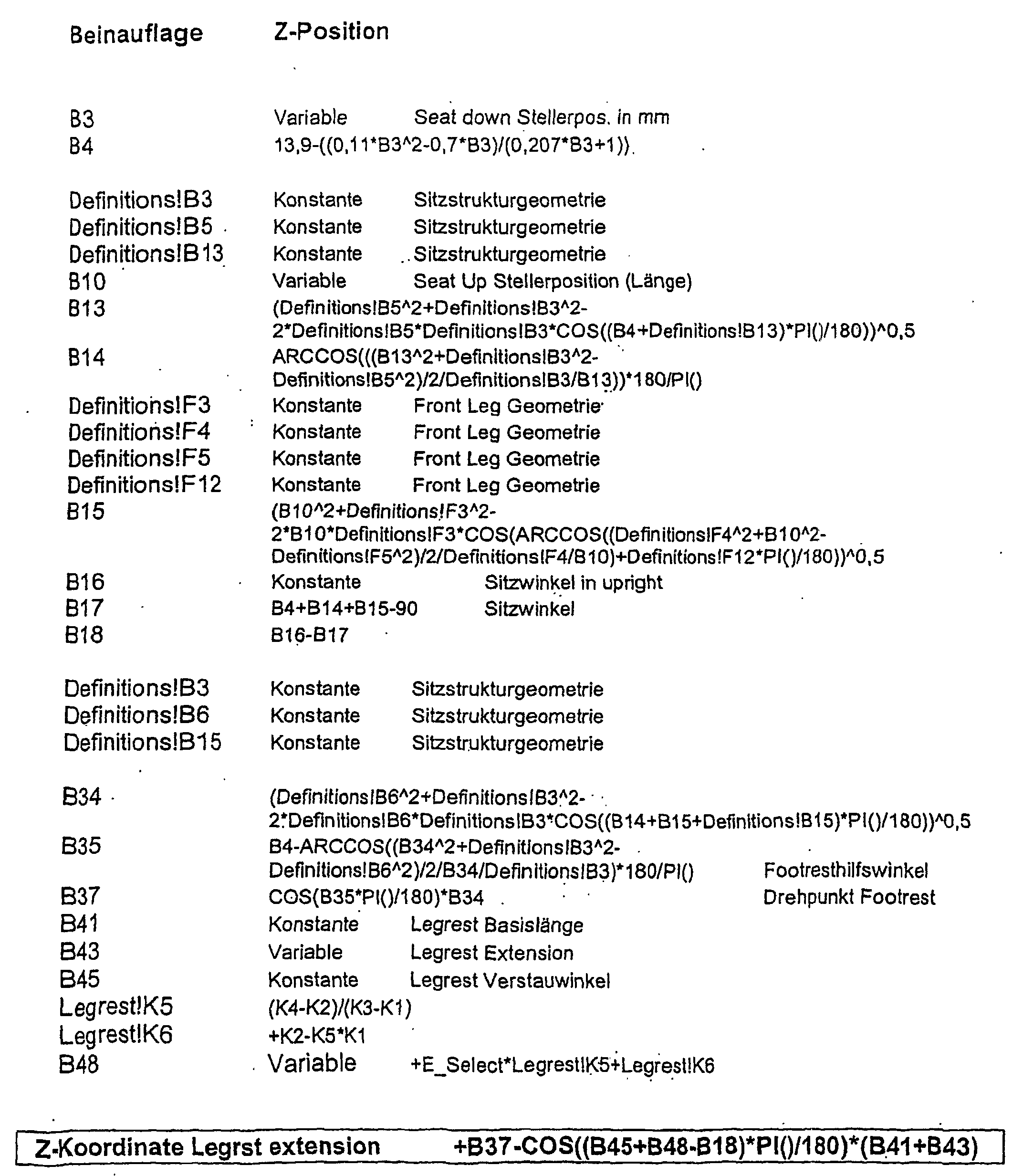

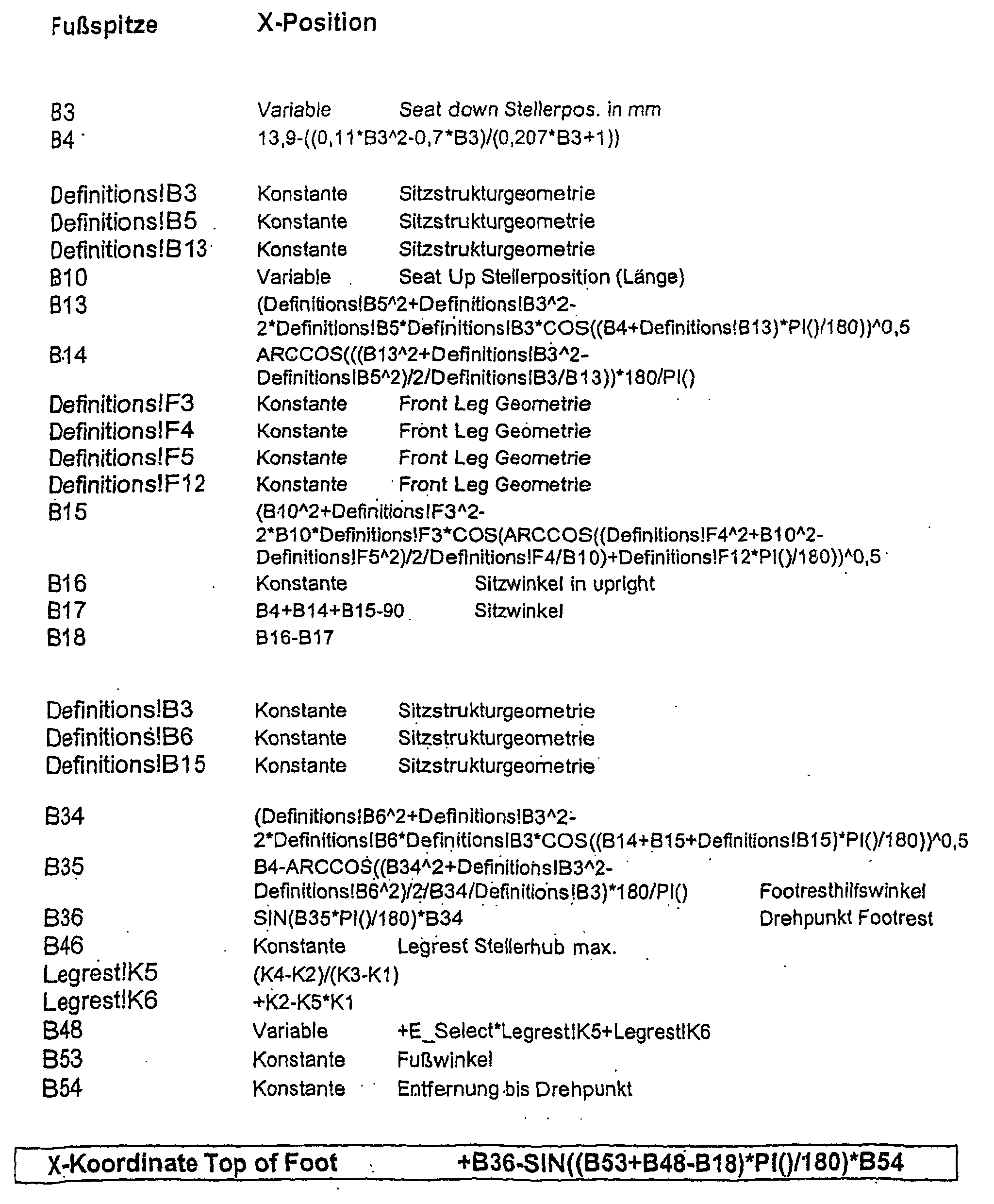

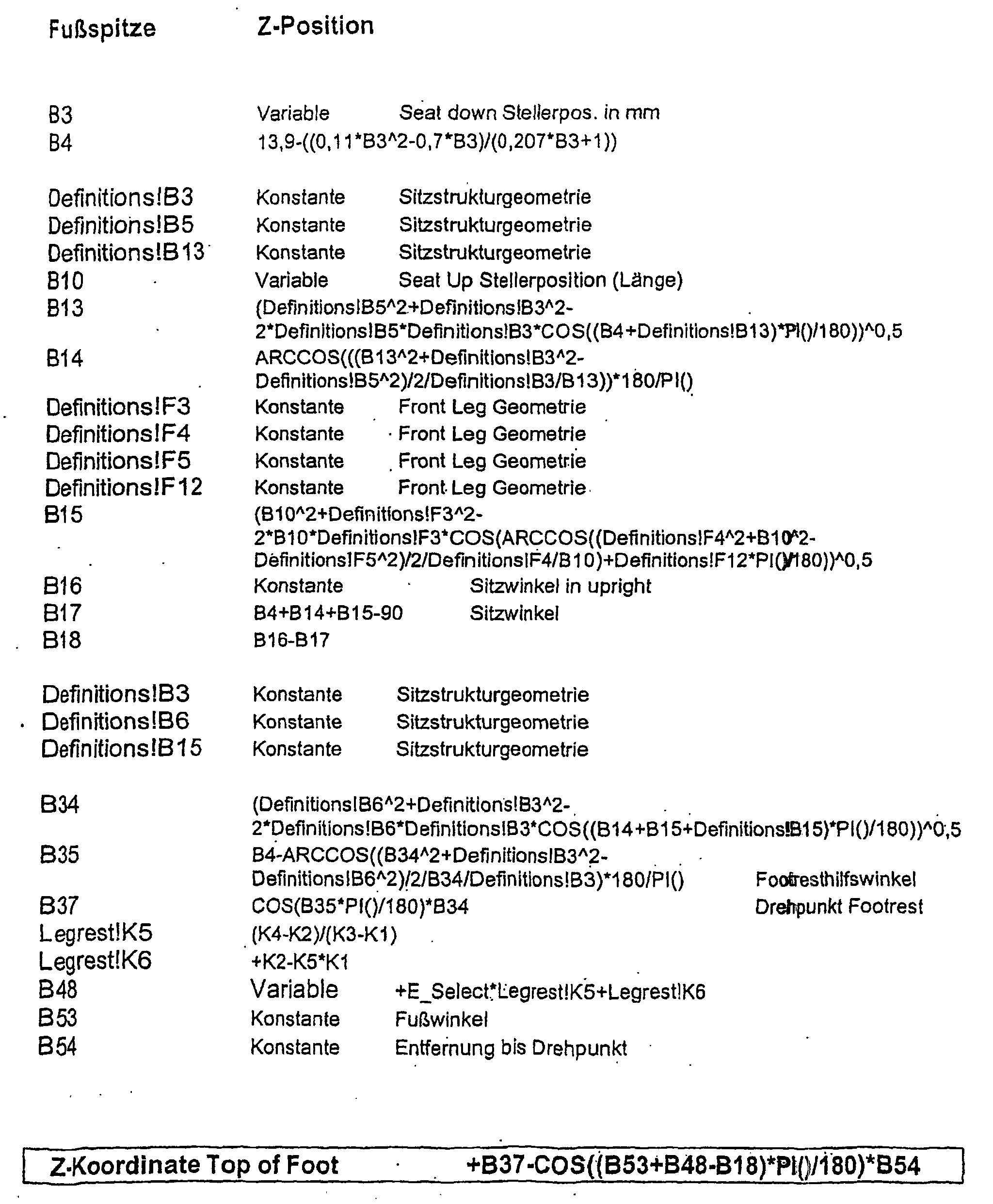

Zur Erläuterung der Formeln wird auf folgendes verwiesen:

Die Formel "X-Koordinate·Backrest" bezeichnet den geometrischen Verlauf der Linienoberkante 50 der Rückenlehne 22. Die in der Formelübersicht genannten variablen Größen ergeben sich regelmäßig aus der Stellerposition der Betätigungseinrichtung in Form eines Aktuators, beispielsweise für das Sitzteil 20 in der abgesenkten Position (vgl. Fig.2). Mit "Front Leg Geometrie" ist die längenhafte Erstreckung der Beinauflage 24 gemeint. Die "Backrestlänge" stellt die Länge der Rückenlehne 22 dar, gegebenenfalls unter Einbeziehen der kopfstützenstellung (Head-reststellung), sofern eine Kopfstütze eingesetzt wird, und mit ihrer Oberkante die Höhenposition der Lehnenoberkante 50 mit bestimmt. Ein hochgestelltes, nach unten hin offenes Dreieck (^) bedeutet, daß der nachfolgende geometrische Wert zu indizieren ist. Es bedeutet also beispielsweise B3^2, daß die jeweils über die Stellerposition ermittelte variable B3 als Wert in Quadrat für die Verwendung in den weiteren Formeln zu nehmen ist, wohingegen beispielsweise die Angabe B3^0,5 bedeutet, daß aus dem Wert B3 die Quadratwurzel zu ziehen ist. Die Winkelfunktionen können aus den Formeln unmittelbar erkannt werden ebenso wie die Klammerausdrücke. Ein hochgestelltes * hat die Bedeutung eines Mal-Zeichens und der Ausdruck PI() bedeutet, daß es sich nach der Excel-Programmiersprache um mathematisch π, also ungefähr um die Konstante 3,14 handelt. Neben der X-Koordinate für die Rückenlehne läßt sich entsprechend auch die Z-Koordinate für die Rückenlehne 22 (Backrest) ermitteln. Ebenso ist nachfolgend die X- und Z-Koordinate in Formeln angegeben für die Beinauflagenverlängerung 48 (Legrest Extension) und in die Hüllkurvenüberlegung wird auch die X- und Z-Koordinate der Fußspitze (Top of Foot), die in der Darstellung nach der Fig.3 mit 9 bezeichnet ist, entsprechend mit einbezogen.

Wird nun der Sitz zwischen seinen Maximalstellungen nach den Fig. 1 und 2 hin und her verfahren und gegebenenfalls individuell noch eingestellt, ermittelt die Überwachungseinrichtung über die vorstehend genannten Formeln fortlaufend die X- und Z-Koordinaten für die Rückenlehne 22, die Beinauflagenverlängerung 48 sowie für die Fußspitze 9 eines fiktiven Sitzbenutzers. Es versteht sich, daß die aufgezeigte mathematische Grundkonstruktion um weitere möglicherweise kollisionsbegründende Randgeometrien ergänzt werden kann, um möglichst genau eine Hüllkurve zu ermitteln, innerhalb deren sich der Sitz in jeder möglichen Einstellposition aufhält. Durch die Vorgabe entsprechender Begrenzungsflächen 58 auch unter Einbeziehen des Kabinenbodens 36 ist dann die Hüllkurve in ihren geometrischen Abmessungen begrenzt und die Überwachungseinrichtung; die die dahingehenden Begrenzungsräume oder Linien abspeichert, wirkt auf den jeweiligen Stellantrieb oder die Gesamteinheit aller Stellantriebe derart ein, daß Kollisionen mit Sicherheit vermieden sind. Wird also beispielsweise die Beinauflage 24 verschwenkt, kann in sinnfälliger Weise die Rückenlehne 22 der Bewegung nachfolgen, um beispielsweise eine vom Sitzbenutzer gewünschte Ruhe- oder Liegestellung (Fig.2) einzunehmen, wobei dann die Bewegung der genannten Sitzkomponenten 20,22,24,48 synchron innerhalb der Hüllkurve erfolgt und zu keinem Zeitpunkt eine Kollision aufgrund dieser gemeinsamen Ansteuerung möglich ist.

## Patentansprüche

1. Sitz, insbesondere Fahrzeugsitz, vorzugsweise Fluggastsitz, mit Sitzkomponenten, wie einem Sitzteil (20), einer Rückenlehne (22) und einer Beinauflage (24), die über mindestens eine Betätigungseinrichtung (26,44,46) in ihrer Lage, insbesondere in ihrer Neigung zueinander, einstellbar sind, und mit einer Überwachungseinrichtung zur Überwachung mindestens einer kollisionsbegründenden Randgeometrie (52) einer bewegbaren Sitzkomponente (24) mit einer vorgegebenen räumlichen Begrenzung (36), wobei die Überwachungseinrichtung zu jedem Zeitpunkt eine kollisionsfreie Bewegung dieser Sitzkomponente (24) innerhalb dieser räumlichen Begrenzung (36) sicherstellt, wobei die räumlichen Begrenzungen Räume (56) voneinander abteilen, in denen jeweils ein Sitz eigenständig angeordnet ist, **dadurch gekennzeichnet, daß** die Überwachungseinrichtung zur Überwachung mindestens einer weiteren kollisionsbegründenden Randgeometrie (50) mindestens einer weiteren Sitzkomponente (22) mit mindestens einer weiteren vorgegebenen räumlichen Begrenzung als Grenzkurve (54,58) dient, daß die Bewegungen der genannten Sitzkomponenten (20,22,24) über eine Bewegungskopplung von mindestens zwei Sitzkomponenten mittels der Betätigungseinrichtung (26,44,46) gemeinsam angesteuert gleichzeitig und synchron erfolgen, daß die Überwachungseinrichtung alle vorgesehenen Bewegungen der kollisionsbegründenden Randgeometrien (50,52) von mindestens zwei Sitzkomponenten (20,22,24) mittels eines mathematischen Algorithmus in einer gemeinsamen fiktiven Hüllkurve oder von Teilen derselben zusammenfaßt, deren Ränder zur Vermeidung von Kollisionen zumindest teilweise durch die Grenzkurven (54,58) der räumlichen Begrenzung definiert sind, daß die dem mathematischen Algorithmus zugrundegelegten Grenzkurven (54,58) aus Geradengleichungen gebildet sind, und daß bei entsprechender Erhöhung der Anzahl an dahingehenden Geradengleichungen eine geschlossene räumliche Hüllkurve entsteht, deren umfaßter Raum als Hüllraum für die kollisionsfreie synchrone Bewegung aller Sitzkomponenten (20,22,24) zur Verfügung steht.

2. Sitz nach Anspruch 1, **dadurch gekennzeichnet, daß** die Überwachungseinrichtung alle vorgesehenen Bewegungen der Sitzkomponenten (20,22,24) mit ihren kollisionsbegründenden Randgeometrien (50,52) nach einem Ablaufplan durchführt, der nach ergonomischen Gesichtspunkten gestaltet ist.

3. Fahrzeugsitz nach Anspruch 1 oder 2, **dadurch gekennzeichnet, daß** jede Sitzkomponente (20,22,24) über eine eigenständige Betätigungseinrichtung (26,44,46) verfügt und daß die Überwachungseinrichtung die Stellungen jeder einzelnen Betätigungseinrichtung (26,44,46) erfaßt.

4. Fahrzeugsitz nach Anspruch 3, **dadurch gekennzeichnet, daß** über die Stellwege der jeweiligen Betätigungseinrichtung (26,44,46), vorzugsweise in Form eines Aktuators, auch die Neigungseinstellwinkel gegenüber einer Bezugsebene erfaßt sind.

5. Fahrzeugsitz nach einem der Ansprüche 1 bis 4, **dadurch gekennzeichnet, daß** die Rückenlehne (22) mit einer ein- und ausfahrbaren Kopfstütze versehen ist und die Beinauflage (24) mit einer ein- und ausfahrbaren Verlängerung (48).

6. Fahrzeugsitz nach einem der Ansprüche 1 bis 5, **dadurch gekennzeichnet, daß** als kollisionsbegründende Randgeometrien der Sitzkomponenten die Lehnen-Oberkante (50) und die Beinauflage-Unterkante (52) mit verwendet sind und/oder daß die Körperkonturen (9) eines Sitzbenutzers zumindest teilweise in die Festlegung der Randgeometrien mit einbezogen sind.

7. Fahrzeugsitz nach einem der Ansprüche 1 bis 6, **dadurch gekennzeichnet, daß** die Überwachungseinrichtung eine Plausibilitätsprüfung der möglichen Stellungen der Sitzkomponenten vornimmt und Fehlbedienungen und -stellungen derart ausschließt.

8. Fahrzeugsitz nach einem der Ansprüche 1 bis 7, **dadurch gekennzeichnet, daß** der Sitz aus einer voll aufgerichteten Sitzposition in eine Liegestellung bringbar ist, in der alle Sitzkomponenten (20,22,24,48) eine gemeinsame, eben verlaufende Liegefläche ausbilden.

## Claims

1. Seat, especially vehicle seat, preferably aeroplane passenger seat, with seat components such as a seat part (20), a back rest (22) and a leg rest (24), the position of which, especially the incline angle towards each other, is adjustable by means of at least one activating means (26, 44, 46), and with a monitoring means for monitoring at least one collision induced edge geometry (52) of a moveable seat component (24) with a pre-determined spatial limit (36), whereby the monitoring means guarantees a collision free movement of this seat component (24) within this spatial limit (36) at any time, whereby the spatial limits divide areas (56) from each other, in each of which a seat is independently positioned, **characterised in that** the monitoring means for monitoring at least one further collision induced edge geometry (50) serves for at least one further seat component (22) with at least one further pre-determined spatial limit as the limiting curve (54, 58), **in that** the movements of the said seat component (20, 22, 24) occurs synchronously and is jointly controlled via a movement coupling of at least two seat components by means of the activating means (26, 44, 46), **in that** the monitoring means incorporates all envisaged movements of the collision induced edge geometry (50, 52) of at least two seat components (20, 22, 24) by means of a mathematical algorithm in a common fictitious sleeve curve or parts of the same, the edges of which are defined at least in part by the limit curves (54, 58) of the spatial limit to avoid a collision, **in that** the limit curves (54, 58) on which the mathematical algorithm is based consists of straight line calculations, and **in that** an enclosed spatial sleeve curve is created for a relevant increase of the number of said straight line calculations, the space enclosed by which is available as sleeve space for the collision free synchronous movement of all seat components (20, 22, 24).

2. Seat according to Claim 1, **characterised in that** the monitoring means carries out all envisaged movements of the seat components (20, 22, 24) with their collision induced edge geometries (50, 52) according to a plan based on an ergonomic point of view.

3. Vehicle seat according to Claim 1 or 2, **characterised in that** each seat component (20, 22, 24) incorporates an independent activating means (26, 44, 46), and **in that** the monitoring means records the position of each individual activating means (26, 44, 46).

4. Vehicle seat according to Claim 3, **characterised in that** the incline angles in relation to a reference plane are also recorded by means of the adjustment paths of the irrelevant activating means (26, 44, 46), preferably in the form of an actuator.

5. Vehicle seat according to one of the Claims 1 to 4, **characterised in that** the back rest (22) is equipped with an extendible and retractable head rest, and the leg rest (24) with an extendible and retractable extension (48).

6. Vehicle seat according to one of the Claims 1 to 5, **characterised in that** the upper edge (50) of the arm rest and the lower edge (52) of the leg rest are also used as collision induced edge geometries of the seat components and/or **in that** the body contours (9) of a seat user are incorporated at least in part during the determination of the edge geometry.

7. Vehicle seat according to one of the Claims 1 to 6, **characterised in that** the monitoring means carries out a plausibility check of the possible positions of the seat components and excludes an incorrect operation and positioning in this way.

8. Vehicle seat according to one of the Claims 1 to 7, **characterised in that** the seat can be moved from a fully upright seat position into a reclined position in which all set components (20, 22, 24, 48) form a common level reclining surface.

## Revendications

1. Siège, en particulier siège de véhicule, de préférence siège d'avion, pourvu de composants de siège, comme une partie de siège (20), un dossier (22) et un repose-pied (24), qui peuvent être ajustés par au moins un dispositif d'actionnement (26, 44, 46) dans leur position, en particulier dans leur inclinaison l'un par rapport à l'autre, et pourvu d'un dispositif de surveillance destiné à surveiller au moins une géométrie de bordure (52) basée sur la collision d'un composant de siège mobile (24) avec une limitation (36) spatiale prédéfinie, le dispositif de surveillance assurant à tout moment un mouvement sans collision du composant de siège (24) à l'intérieur de la limitation spatiale (36), les limitations spatiales (36), dans lesquelles respectivement un siège est installé de manière autonome, se séparant l'une de l'autre, **caractérisé en ce que** le dispositif de surveillance destiné à la surveillance d'au moins une autre géométrie de bordure (50) basée sur la collision d'au moins un autre composant de siège (22) pourvu d'au moins une autre limitation spatiale prédéfinie sert de courbe limite (54, 58), **en ce que** les mouvements desdits composants du siège (20, 22, 24) s'effectuent simultanément et de manière synchrone commandés ensemble par une accouplement de mouvement d'au moins deux composants du siège au moyen du dispositif d'actionnement (26, 44, 46), **en ce que** le dispositif de surveillance regroupe tous les mouvements prévus des géométries de bordures basées sur la collision (50, 52) des au moins deux composants de siège (20, 22, 24) au moyen d'un algorithme mathématique dans une courbe enveloppante fictive ou dans des parties de cette dernière, dont les bordures sont définies pour empêcher les collisions au moins partiellement par les courbes limites (54, 58) de la limitation spatiale, **en ce que** les courbes limites (54, 58) à la base de l'algorithme mathématique sont formées par des équations de la droite, et **en ce qu'**en cas d'augmentation correspondante du nombre d'équations de la droite, une courbe enveloppante spatiale fermée est générée, dont l'espace périphérique est disponible comme espace d'enveloppe pour le mouvement synchrone sans collision de tous les composants du siège (20, 22, 24).

2. Siège selon la revendication 1, **caractérisé en ce que** le dispositif de surveillance exécute tous les mouvements prévus des composants du siège (20, 22, 24) avec ses géométries de bordure basée sur les collisions (50, 52) selon un plan de déroulement qui est conçu d'un point de vue ergonomique.

3. Siège de véhicule selon la revendication 1 ou 2, **caractérisé en ce que** chaque composant de siège (20, 22, 24) dispose d'un dispositif d'actionnement autonome (26, 44, 46) et **en ce que** le dispositif de surveillance enregistre les positions de chaque dispositif d'actionnement individuel (26, 44, 46).

4. Siège de véhicule selon la revendication 3, **caractérisé en ce que**, sur le chemin de réglage de chaque dispositif d'actionnement (26, 44, 46), de préférence sous la forme d'un détecteur, l'angle de réglage d'inclinaison est également enregistré par rapport à un niveau de référence.

5. Siège de véhicule selon l'une quelconque des revendications 1 à 4, **caractérisé en ce que** le dossier (22) est pourvu d'un repose-tête relevable et rétractable et le repose-pied (24) d'une extension (48) relevable et rétractable.

6. Siège de véhicule selon l'une quelconque des revendications 1 à 5, **caractérisé en ce que** la bordure supérieure du dossier (50) et la bordure inférieure du repose-pied (52) sont utilisées comme géométries de bordure basée sur la collision et/ou **en ce que** les contours de corps (9) d'un utilisateur de siège sont au moins partiellement intégrés dans la détermination des géométries de bordure.

7. Siège de véhicule selon l'une quelconque des revendications 1 à 6, **caractérisé en ce que** le dispositif de surveillance entreprend un essai de plausibilité des positions possibles des composants de siège et exclut ainsi les mauvaises manipulations et positions.

8. Siège de véhicule selon l'une quelconque des revendications 1 à 7, **caractérisé en ce que** le siège peut être amené d'une position de siège totalement droite dans une position de couchette, dans laquelle tous les composants de siège (20, 22, 24, 48) forment une surface de couchette commune et droite.
